# EUROPÄISCHE PATENTANMELDUNG

(11) **EP 4 847 269 A1**
(43) Veröffentlichungstag der Anmeldung: **02.12.2026**
(21) Anmeldenummer: 25179439.2
(22) Anmeldetag: 28.05.2025
(51) Int. Cl.: B41M 3/00, A63F 3/06, B42D 15/02, C09D 5/00, C09D 133/00

(54) **VERFAHREN UND DRUCKSYSTEM ZUR HERSTELLUNG EINES SOFORTLOTTERIESCHEINS, ZUSAMMENSETZUNG FÜR EINE RUBBELSCHICHT EINES SOFORTLOTTERIESCHEINS UND SOFORTLOTTERIESCHEIN**

(71) Anmelder: Singular Lotteriesysteme eGbR, 76287 Rheinstetten (DE)
(72) Erfinder: Haase, Henrike, 76185 Karlsruhe (DE); Haase, Frieder, Karlsbad 76307 (DE)
(74) Vertreter: LBP Lemcke, Brommer & Partner Patentanwälte mbB

(57) **Zusammenfassung**

Verfahren zur Herstellung eines Sofortlotteriescheins, umfassend die Verfahrensschritte
A) Bereitstellen eines mehrschichtigen Drucksubstrats (2), welches zumindest eine strahlungsundurchlässige Sperrschicht umfasst;
B) Aufbringen einer Veredelungsschicht (3) auf mindestens eine Seite des Drucksubstrats (2);
C) Individualisiertes Aufbringen mindestens einer Gewinninformation (11) zumindest im Bereich eines Gewinnfeldes (10) auf die Veredelungsschicht (3) mittels Mehrfarbdrucks;
D) Aufbringen einer Klarschicht (15) zumindest auf die Gewinninformation (11), vorzugsweise vollflächig auf das Gewinnfeld (10);
E) Aufbringen einer Rubbelschicht (7) auf die Klarschicht (15) zumindest im Bereich der Gewinninformation (11), vorzugsweise vollflächig im Bereich des Gewinnfeldes (10);
F) Aufbringen einer Deckfarbe (8) auf die Rubbelschicht (7);
G) Individualisiertes Aufbringen einer Dekoration (9) auf die Deckfarbe (11).

## Beschreibung

Die Erfindung betrifft ein Verfahren zur Herstellung eines Sofortlotteriescheins, ein Drucksystem zur Herstellung eines Sofortlotteriescheins, eine Zusammensetzung für eine Rubbelschicht eines Sofortlotteriescheins und einen Sofortlotterieschein.

Ein Sofortlotterieschein ist im Rahmen der Erfindung ein Spielschein, bei dem das Spielergebnis unmittelbar nach seinem Erwerb festgestellt werden kann. Dies geschieht durch das Freirubbeln des Gewinnfeldes, indem eine Rubbelschicht entfernt wird. Die unter der Rubbelschicht liegenden Gewinninformationen zeigen dem Spielteilnehmer an, ob und in welcher Höhe er gewonnen hat, ohne, dass eine Auslosung oder vergleichbare Feststellung des Spielergebnisses abgewartet werden muss.

Da der Sofortlotterieschein unmittelbarer Träger von Gewinninformationen ist, ist er vergleichsweise hohen Sicherheits- und Qualitätsanforderungen unterworfen, die einen Betrug verhindern sollen. Insbesondere muss ausgeschlossen sein, dass eine von der Rubbelschicht verdeckte Gewinninformation noch vor dem Erwerb des Sofortlotteriescheins festgestellt werden kann. Gleichzeitig ist ein großer Gestaltungsspielraum gewünscht, um die Sofortlotteriescheine hinsichtlich ihres äußeren Erscheinungsbildes für die Verbraucher optisch ansprechend zu machen oder etwa unterschiedliche Spielvarianten umzusetzen.

Es ist die Aufgabe der Erfindung, Mittel vorzuschlagen, mit denen Sofortlotteriescheine unter Erfüllung von Sicherheitsvorgaben und Qualitätsansprüchen wirtschaftlich hergestellt werden können und gleichzeitig mit einem großen Gestaltungsfreiraum einhergehen.

Die Aufgabe wird gelöst durch ein Verfahren nach Anspruch 1, einem Sofortlotterieschein nach Anspruch 11, einem Drucksystem nach Anspruch 13 und einer Zusammensetzung für eine Rubbelschicht nach Anspruch 15.

Das erfindungsgemäße Verfahren dient der Herstellung eines Sofortlotteriescheins und umfasst die folgenden Verfahrensschritte:
A) Bereitstellen eines mehrschichtigen Drucksubstrats, welches zumindest eine strahlungsundurchlässige Sperrschicht umfasst;
B) Aufbringen einer Veredelungsschicht auf mindestens eine Seite des Drucksubstrats
C) Individualisiertes Aufbringen mindestens einer Gewinninformation im Bereich eines Gewinnfeldes auf die Veredelungsschicht mittels Mehrfarbdrucks;
D) Aufbringen einer Klarschicht zumindest auf die Gewinninformation, insbesondere vollflächig auf das Gewinnfeld;
E) Aufbringen einer Rubbelschicht auf die Klarschicht zumindest im Bereich der Gewinninformation, vorzugsweise vollflächig im Bereich des Gewinnfeldes;
F) Aufbringen einer Deckfarbe auf die Rubbelschicht;
G) Individualisiertes Aufbringen einer Dekoration auf die Deckfarbe;

Die vorstehend beschriebenen Verfahrensschritte beruhen auf der Erkenntnis, dass es einerseits möglich ist, einen Sofortlotterieschein bereitzustellen, der vergleichsweise hohen Qualitätsanforderungen und Sicherheitsvorgaben gerecht wird und die dafür eingesetzten Mittel andererseits einen großen Gestaltungsspielraum ermöglichen, um wahlweise unterschiedliche Spielvarianten abzubilden.

Das in Verfahrensschritt A) bereitgestellte Drucksubstrat dient als Träger für die darauf befindlichen Schichten und ist nicht auf ein besonderes Material oder eine besondere Struktur beschränkt. Es ist allein wesentlich, dass das Drucksubstrat mehrschichtig ausgebildet ist und eine der vom Drucksubstrat umfasste Schichten eine strahlungsundurchlässige Sperrschicht ist.

Der Einsatz eines solchen Drucksubstrats ermöglicht es auf einfache Weise, eine Durchleuchtung des Sofortlotteriescheins zu verhindern, bei der zerstörungsfrei auf die von der Rubbelschicht verdeckten Gewinninformation geschlossen werden kann. Insbesondere ist die Sperrschicht undurchlässig für Licht und/oder Röntgenstrahlung.

In einer denkbaren Ausführungsform kann es sich bei dem Drucksubstrat um ein papier- oder pappbasiertes Erzeugnis handeln, welches organische Fasern umfasst, die dem Drucksubstrat die gewünschte Stabilität und Flexibilität verleihen. Bei der strahlungsundurchlässigen Sperrschicht kann es sich insbesondere um eine graphithaltige Schicht handeln, welche zwischen mindestens zwei Schichten des Drucksubstrats angeordnet ist. Insbesondere handelt es sich bei der strahlungsundurchlässigen Sperrschicht um eine mit Graphit gefärbte lichtdichte Klebeschicht, welche insbesondere schwarz ist und vollflächig oder bereichsweise zwischen zwei außenliegenden, faserbasierten Schichten des mehrschichtigen Drucksubstrats angeordnet ist.

Die Veredelungsschicht des Verfahrensschrittes B) kann eine oder mehrere Druckfarben enthalten, die der Verzierung des Drucksubstrats dienen. Grundsätzlich ist die Veredelungsschicht nicht auf eine bestimmte Farbe beschränkt. Ebenso ist es denkbar, dass die Veredelungsschicht glänzende oder glitzernde Partikel umfasst, die insbesondere den gleichen optischen Effekt hervorrufen können, wie Gold oder Silber.

Gemäß Verfahrensschritt C) ist es wesentlich, dass die Gewinninformation individualisiert auf die Veredelungsschicht aufgebracht wird. Die Gewinninformation kann als eine unmittelbar interpretierbare Auskunft angesehen werden, die es dem Spielteilnehmer ermöglicht, zu beurteilen, ob das freigerubbelte Gewinnfeld mit einem Gewinn einhergeht oder nicht und wie hoch der Gewinn gegebenenfalls ist. Durch individualisiertes Aufbringen der Gewinninformation ist es möglich, den Sofortlotterieschein nicht nur in gestalterischer Hinsicht zu verbessern, sondern auch hinsichtlich der Betrugssicherheit.

Es ist insbesondere denkbar, dass die Gewinninformation eines Sofortlotteriescheins im Rahmen der Erfindung vollständig oder nur teilweise gegenüber einer anderen Gewinninformation eines anderen Sofortlotteriescheins variiert wird, insbesondere hinsichtlich eines graphischen Bildbestandteils und/oder eines schriftbildlichen Wort- oder Zahlenbestandteils. Hierbei ist es denkbar, dass die Position und/oder die Orientierung und/oder die Größe und/oder Farbe und/oder Bildelement und/oder Wortelement der Gewinninformation innerhalb des jeweiligen Gewinnfeldes individuell eingestellt werden. Dadurch ist es vor Erwerb des Sofortlotteriescheins nicht ohne sichtbare Zerstörung oder Manipulation der Rubbelschicht möglich, mit der erforderlichen Sicherheit zu ermitteln, welche konkrete Gewinninformation der Sofortlotterieschein unter der Rubbelschicht trägt. Nur geringfügig invasive Methoden, bei denen die Rubbelschicht z.B. optisch unauffällig punktiert wird, um die darunter liegende Gewinninformation freizulegen, ermöglichen es aufgrund des Individualisierungsgrades nicht, zuverlässig auf die vollständigen Gewinninformation zu schließen. Jeder Sofortlotterieschein kann also in Abhängigkeit der Ausgestaltung der Gewinninformation als Unikat hergestellt werden.

Der Einsatz von Mehrfarbdruck begünstigt die Individualisierungsmöglichkeiten der Gewinninformation. Ein Gewinnfeld kann im Rahmen der Erfindung als ein räumlicher Bereich angesehen werden, in welchem sich eine Gewinninformation befindet. Es liegt im Rahmen der Erfindung, dass das Gewinnfeld, insbesondere seine Abmessungen und/oder Grenzen, gekennzeichnet ist oder auch, dass keinerlei Kennzeichnung vorgesehen ist.

Es ist denkbar, dass neben der Gewinninformation im gleichen Verfahrensschritt, insbesondere mittels gleicher Mittel, weitere individualisierende Elemente auf den Sofortlotterieschein aufgebracht werden, beispielsweise Bildelemente oder Wortelemente oder Zahlenelemente, die entsprechend einem gewünschten Layout auf dem Sofortlotterieschein angeordnet sind.

In Verfahrensschritt D) wird eine Klarschicht zumindest auf die Gewinninformation aufgebracht. Dadurch wird zumindest die Gewinninformation derart geschützt, dass die Rubbelschicht, welche in einem der darauffolgenden Schritte auf den Sofortlotterieschein aufgebracht wird, einerseits gut an dem Sofortlotterieschein haftet und andererseits auch mit herkömmlichen Mitteln und einfach entfernt werden kann. Hierbei kann die Gewinninformation auf dem Sofortlotterieschein verbleiben, ohne ebenfalls entfernt zu werden. Die Klarschicht ist im getrockneten Zustand vorzugsweise im Wellenlängenbereich sichtbaren Lichts lichtdurchlässig. Dadurch ist es möglich, die Gewinninformation einfach zu erkennen und zu interpretieren.

In Verfahrensschritt E) wird die Rubbelschicht zumindest im Bereich der Gewinninformation auf die Klarschicht aufgebracht. Die Rubbelschicht umfasst zweckdienlicherweise Rubbelpigmente, die mittels eines Haftmittels an der Klarschicht applizierbar sind. Sie dient als Träger von Deckfarbe und Dekoration, welche in den Verfahrensschritten F) und G) aufgetragen werden und ermöglicht es, diese mit mechanischen Mitteln, zum Beispiel unter Zuhilfenahme einer Münze, bereichsweise oder vollständig zu entfernen.

In Verfahrensschritt F) wird eine Deckfarbe auf die Rubbelschicht aufgebracht. Dadurch ist es möglich, eine Deckschicht zu schaffen, welche in einem anschließenden Verfahrensschritt G) individualisiert mit einer Dekoration versehen werden kann.

Insgesamt geht das Verfahren mit einer hohen Flexibilität bei der Herstellung von Sofortlotteriescheinen einher und ermöglicht dabei einen hohen Gestaltungsfreiraum.

In einer vorteilhaften Weiterbildung handelt es sich bei dem Drucksubstrat um einen mehrschichtigen Spielkartenkarton.

Bei Spielkartenkarton kann es sich um ein Material handeln, welches üblicherweise zur Herstellung von Spielkarten verwendet wird. Üblicherweise weist Spielkartenkarton eine hohe Stabilität und Flexibilität auf. Gemäß der oben beschriebenen vorteilhaften Weiterbildung ist es vorteilhaft, wenn der Spielkartenkarton zumindest zwei Deckschichten, also eine Ober- und eine Unterseite aufweist sowie eine dazwischenliegende Kernschicht, welche opak ist und das Durchscheinen von Licht zwischen der Ober- und der Unterseite, also den Deckschichten, verhindert. Es ist eine Erkenntnis, dass Spielkartenkarton handelsüblich und damit leicht verfügbar ist und gleichzeitig die nötigen Eigenschaften aufweist, um den Sicherheitsanforderungen bei der Herstellung von Sofortlotteriescheinen gerecht werden zu können. So verhindert der Aufbau des Spielkartenkartons das Durchscheinen von Motiven und insbesondere Gewinninformationen. In an sich üblicher Weise kann der Spielkartenkarton eine Grammatur von 270 g/m² bis 350 g/m² aufweisen.

In einer vorteilhaften Weiterbildung werden die Veredelungsschicht, die Gewinninformation und die Klarschicht mittels Digitaldrucks aufgebracht, insbesondere bei einer Auflösung von 2400 x 2400 dpi.

Die vorstehend beschriebene, vorteilhafte Weiterbildung beruht auf der Erkenntnis, dass der Einsatz des Digitaldrucks es ermöglicht, die erfindungsgemäßen Vorteile hinsichtlich des Auftrags der Veredelungsschicht der Gewinninformation und der Klarschicht besonders einfach zu erreichen. Bei dem Digitaldruck handelt es sich um ein Druckverfahren, bei dem digitale Druckdaten direkt auf ein Druckmedium, vorliegend also dem Drucksubstrat bzw. die darauf schon befindlichen Schichten, übertragen werden, ohne dass eine feste Druckform wie z.B. eine Druckplatte benötigt wird. Dies unterscheidet den Digitaldruck von analogen Druckverfahren wie dem Offset-Druck oder dem Tiefdruck. Der Einsatz eines Digitaldruckverfahrens stellt im Rahmen der Erfindung eine Abkehr von gängigen Drucktechniken und Drucktechnologien dar, da dieser bisher grundsätzlich mit niedriger Produktivität einherging, die ihn für vergleichsweise hohe herzustellende Stückzahlen von Sofortlotteriescheinen ungeeignet gemacht haben. Untersuchungen der Anmelderin haben jedoch gezeigt, dass die damit erreichbaren Vorteile hinsichtlich der Qualität und Individualisierungsmöglichkeiten von Sofortlotteriescheinen in einem günstigen Verhältnis zu der erreichbaren Produktivität stehen.

Es ist ein weiterer Vorteil, dass mit den vorstehend genannten Merkmalen insbesondere bei Verwendung von Spielkartenkarton als Drucksubstrat ein recyclingfähiges, ökologisch und gesundheitlich unbedenkliches Produkt in beliebigen Auflagen produziert werden kann, ohne auf Sondereffekte, wie Gold und Silber verzichten zu müssen, und darüber hinaus einen Mehrwert in der Umsetzbarkeit von verschiedenen Spielvarianten bietet.

Die vorteilhafte Weiterbildung ist nicht auf eine bestimmte Art des Digitaldrucks beschränkt. Insbesondere kann es sich dabei um einen elektrofotografischen Druck, insbesondere Laser- oder Tonerdruck handeln. Vorzugsweise ist der Einsatz eines Trockentoner-Digitaldrucks denkbar, welcher auf eine Bildtrommel zurückgreift, die elektrostatisch aufgeladen und mittels eines Lasers oder einer LED-Belichtungseinheit mit dem Druckbild punktweise beleuchtet werden kann. Ein trockener, feingemahlener Toner, welcher in Pulverform vorliegen kann, wird auf den belichteten Stellen der Bildtrommel aufgetragen und wird von der Trommel über einen als Zwischenträger oder jedoch direkt auf das Drucksubstrat übertragen. Anschließend wird das Trockentonerpulver durch Hitze und Druck fixiert, wodurch ein dauerhaftes Druckbild entsteht, dass wasser- und abriebfest ist. Anschließend wird die Bildtrommel entladen und gereinigt, so dass sie für den nächsten Druckauftrag bereit ist. Auf diese Weise ist eine gute Individualisierung der Gewinninformation möglich. Es ist denkbar, dass für den Auftrag der Veredelungsschicht, der Gewinninformation und der Klarschicht jeweils eigene Druckmodule einer oder mehrerer Druckvorrichtungen zum Einsatz kommen.

Mittels des Trockentoner-Digitaldrucks ist es möglich, eine hohe Druckqualität zu erreichen, wobei scharfe Konturen und feine Details auf dem Sofortlotterieschein individualisierbar abbildbar sind. Zur Fixierung des Toners kann ein Infrarotstrahler eingesetzt werden. Anschließend kann der derart bearbeitete Sofortlotterieschein weiterverarbeitet werden.

Eine wichtige Erkenntnis, auf der die vorteilhafte Weiterbildung beruht, ist, dass der Trockentonerdigitaldruck, entgegen der geläufigen Verfahrensprinzipien, zu einer wirtschaftlichen Herstellung von Sofortlotteriescheinen führen kann.

Ein wesentlicher Vorteil des Digitaldrucks besteht darin, variable Daten zu drucken, um die Sofortlotteriescheine individualisieren zu können. Während man bei analogen Drucktechnologien durch die Notwendigkeit einer Druckform auf ein Layout limitiert ist, kann erfindungsgemäß jeder Sofortlotterieschein als Unikat gedruckt werden. Durch den Einsatz künstlicher Intelligenz können bestimmte Designelemente, insbesondere Muster, millionenfach in verschieden Ausführungen erzeugt werden und dieses damit individualisieren. Darüber hinaus könnten auch persönliche Daten verarbeitet werden und so personalisierte Sofortlotteriescheine erzeugt werden.

Es ist vorteilhaft, wenn zumindest die Gewinninformation und/oder weitere Elemente des Sofortlotteriescheins, beispielsweise Sicherheitscodes, Bildelemente oder Wortelemente, die entsprechend einem gewünschten Layout angeordnet sind, hinsichtlich mindestens eines Merkmals gegenüber bereits gedruckten oder noch zu druckenden Gewinninformationen oder dekorativen Elementen unterschiedlich ausgebildet sind, um eine eindeutige Identifizierbarkeit und Nachverfolgbarkeit jedes einzelnen Druckstücks zu gewährleisten. Dies kann die Verwendung variabler Daten im Druck (Variable Data Printing, VDP) umfassen, wobei spezifische Informationen aus einer Datenbank abgerufen und individuell auf jedes Druckerzeugnis angewendet werden. Dies kann in Form von Sicherheitscodes, Seriennummern, Losnummern, individuellen QR-Codes oder anderen alphanumerischen Zeichenfolgen erfolgen. Darüber hinaus kann die Erzeugung algorithmisch generierter Muster oder Designs genutzt werden, um für jedes Exemplar eine individuelle grafische Darstellung zu schaffen. Diese Muster können zufällig oder nach definierten Regeln variieren, wodurch sich einzigartige Druckbilder ergeben. Ein weiterer Aspekt kann die Integration veränderlicher Sicherheitsmerkmale, wie Mikrotexte, steganografische Codes oder digitale Wasserzeichen, die für den Betrachter kaum sichtbar, jedoch maschinenlesbar sind und zur Fälschungssicherheit beitragen. Durch die Veränderung der Druckparameter, wie Farbgebung, Transparenz oder Deckkraft, ist es zudem möglich, ein variierendes optisches Erscheinungsbild zu erzeugen. Zusätzlich können gestalterische Abweichungen, beispielsweise in der Typografie, den Zeichenabständen oder dem Layout, angewendet werden, um eine differenzierte Individualisierung zu erzielen. Darüber können die Gewinninformationen gemäß einer gewünschten Gewinnverteilung zufällig auf die Sofortlotteriescheine aufgebracht werden.

In einer vorteilhaften Weiterbildung werden die Rubbelschicht und die Deckfarbe mittels analogen Flexodrucks aufgebracht.

Bei Flexodruck handelt es sich um ein analoges Hochdruckverfahren, bei dem eine flexible Druckplatte mit einem gewünschten Druckbildprofil auf einen Druckzylinder gespannt wird und im Bereich erhabener Stellen Druckfarbe aufnimmt. Dies geschieht mittels einer Rasterwalze, welche die Farbmenge einstellt und für eine präzische Farbübertragung sorgt. Die derart bedruckte Platte überträgt die Farbe direkt auf den Sofortlotterieschein, welche mittels Verdunstung oder Infrarothärtung aushärtet. Es ist ein Vorteil, dass mittels des Flexodrucks hohe Druckgeschwindigkeiten erreichbar sind sowie eine gute Kosteneffizienz bei hohen Auflagen.

In einer alternativen Ausführungsform werden die Rubbelschicht und die Deckfarbe vorteilhafterweise mittels Inkjetdrucks aufgebracht.

Es ist also denkbar, dass das Auftragen der Veredelungsschicht, der Gewinninformation, der Klarschicht sowie außerdem auch der Rubbelschicht und der Deckfarbe mittels Digitaldruck erfolgen kann, wodurch die Herstellung des Sofortlotteriescheins im Rahmen der erfindungsgemäßen Verfahrensschritte durchgehend digital erfolgen kann.

Bei dem Inkjetdruck (auch Tintenstrahldruck) handelt es sich um ein digitales Druckverfahren, bei dem flüssige Tinte durch Düsen auf das Druckmedium aufgetragen wird. In dem vorliegenden Verfahren wird die Tinte in Tropfen auf das Material gesprüht, was in an sich bekannter Weise gemäß Drop-on-Demand oder Continuous-Inkjet erfolgen kann. Bei dem Drop-on-Demand-Verfahren wird Tinte nur dort abgegeben, wo ein Bildpunkt benötigt wird, was mittels thermischen Inkjets (Bubblejet) oder piezoelektrischen Inkjets möglich ist. Bei der Verfahrensvariante mittels Continuous-Inkjet wird ein kontinuierlicher Tintenstrom erzeugt, wobei jedoch nur die benötigen Tropfen auf dem Drucksubstrat landen. Überschüssiges Druckmedium kann wiederverwertet werden, was insbesondere für eine gute Verfahrenseffizienz sorgen kann. Nach dem Auftrag der Tinte erfolgt ein Trocknen der Rubbelschicht und der Deckfarbe, was im vorliegenden Fall vorteilhafterweise mittels Infrarotstrahlung geschehen kann.

Es ist eine Erkenntnis der Anmelderin, dass der Inkjetdruck zwar mit langsameren Druckgeschwindigkeiten einhergeht als Offset oder Flexodruck, allerdings wird dieser Nachteil durch den hinzugewonnenen Gestaltungsfreiraum und die verbesserte Druckqualität aufgewogen.

In einer vorteilhaften Weiterbildung, bei der die Rubbelschicht und die Deckfarbe mittels Inkjetdrucks aufgebracht werden, weist die Rubbelschicht eine wasserbasierte Dispersion mit Acrylat-Polymeren und Rubbelpartikeln auf. Die Acrylatpolymere weisen eine molare Masse unterhalb von 100 kg/mol auf. Zusätzlich oder alternativ weisen die Rubbelpartikel jeweils eine Partikelgröße unterhalb von 200 nm auf, sind vorzugsweise kolloidal und/oder dispergierend und/oder weisen einen pH-Wert zwischen 7 und 9 auf.

Die vorstehend beschriebene Rubbelschicht, welche für die Herstellung eines Sofortlotteriescheins verwendet werden kann, weist einerseits eine gute Eignung für den Einsatz bei Sofortlotteriescheinen auf und andererseits auch für den Auftrag im Inkjet-Verfahren. Mit Blick auf die Eigenschaften des Sofortlotteriescheins kann die Rubbelschicht in einfacher Weise von der darunterliegenden Klarschicht entfernt werden, um die Gewinninformation freizugeben. Mit Blick auf die Durchführung des Verfahrens bestehen Vorteile darin, dass die Rubbelfarbe im flüssigen Zustand homogene Eigenschaften aufweist, sodass ein entsprechend homogener Auftrag auf die Sofortlotteriescheine möglich ist. Darüber hinaus werden die beim Inkjetdruck eingesetzten Druckköpfe nicht verstopft, was zu einem geringen Wartungsaufwand führt. Ein weiterer Vorteil besteht darin, dass die erreichbaren Druckgeschwindigkeiten positiv beeinflusst werden, was die Wirtschaftlichkeit des Verfahrens verbessert und damit nicht nur für kleine und mittlere, sondern auch für große Stückzahlen vorteilhaft macht.

In einer vorteilhaften Weiterbildung wird die Dekoration mittels Inkjetdrucks aufgebracht, insbesondere mit einer Auflösung von 1600 x 1600 dpi.

Der Einsatz des Inkjetdrucks ermöglicht es, auch im Bereich der Dekoration eine individualisierte Gestaltung des Sofortlotteriescheins. Dadurch ist es hochqualitativ möglich, die üblicherweise unbedruckte oder allenfalls mit schlichten Motiven bedruckte Rubbelschicht bzw. die darauf befindliche Deckfarbe mit hochwertigen Motiven oder Dekorationselementen zu versehen, welche die hergestellten Sofortlotteriescheine besonders attraktiv für den Verkauf machen.

In einer vorteilhaften Weiterbildung wird in Verfahrensschritt C) zumindest die Gewinninformation innerhalb eines Gewinnfeldes variabel eingestellt.

Eine variable Einstellung der Gewinninformation umfasst im Rahmen der vorteilhaften Weiterbildung eine gezielte Veränderung eines grundsätzlich beliebigen Merkmals der Gewinninformation innerhalb eines Gewinnfeldes. Insbesondere durch den Einsatz von Trockentonerdigitaldrucks ist es möglich, die Gewinninformation nicht nur inhaltlich, sondern auch in ihrer visuellen Darstellung flexibel zu gestalten. So kann die Platzierung eines Gewinnsymbols, Gewinntextes oder -beträge innerhalb des Gewinnfeldes von Schein zu Schein variieren, wodurch eine zusätzliche Sicherheit gegen vorhersehbare Muster geschaffen wird. Insbesondere sind hierbei eine Position und/oder eine Größe und/oder Gewinnhöhe der Gewinninformation variabel einstellbar, insbesondere innerhalb eines Produktionsloses.

Neben der Position kann auch die Schriftgröße oder der Schriftstil der Gewinninformation individuell angepasst werden, um optische Variationen zu ermöglichen. Hierbei können insbesondere softwaregesteuerte Layout-Anpassungen oder variable Druckköpfe zum Einsatz kommen, die die gewünschte Gestaltungsfreiheit erlauben. Zudem können unterschiedliche Anordnungen von Gewinnsymbolen realisiert werden, insbesondere bei Losen mit mehreren Gewinnfeldern, bei denen sich die Reihenfolge oder Struktur der angezeigten Werte für jeden Schein individuell verändert.

Eine weitere Möglichkeit der Individualisierung kann die Farbgestaltung der Gewinninformation betreffen. Durch den Einsatz digitaler Mehrfarbdruckverfahren kann die Darstellung variabel erfolgen, wodurch zusätzliche optische Effekte und Sicherheitsmerkmale integriert werden können. Darüber hinaus lässt sich die Größe oder Form des Bereichs, in dem die Gewinninformation erscheint, flexibel anpassen. So könnten größere Gewinne in einem hervorgehobenen, größeren Feld erscheinen, während kleinere Gewinne in dezenterer Darstellung abgebildet werden.

Diese variablen Gestaltungsmöglichkeiten bieten mehrere Vorteile. Zum einen erhöhen sie die Fälschungssicherheit, da jeder Schein individuell gestaltet ist und sich Muster schwerer erkennen lassen. Zum anderen tragen sie zu einer attraktiveren und abwechslungsreicheren Spielerfahrung bei, da kein Schein exakt dem anderen gleicht. Durch den gezielten Einsatz digitaler Druckverfahren kann eine algorithmisch gesteuerte Layout-Anpassung erfolgen, die eine einzigartige und flexible Gewinnfeldgestaltung ermöglicht.

In einer vorteilhaften Weiterbildung umfasst das Verfahren einen Verfahrensschritt H), bei dem der Sofortlotterieschein vereinzelt wird. Die Vereinzelung dient im Rahmen der vorteilhaften Weiterbildung dem Trennen eines hergestellten Lotteriescheins von mindestens einem anderen Sofortlotterieschein oder einer Vorverarbeitungsstufe davon. Die Vereinzelung kann mittels einer Stanzvorrichtung erfolgen.

In einer vorteilhaften Weiterbildung umfasst das Verfahren einen Verfahrensschritt I), bei dem eine Qualitätsprüfung des Sofortlotteriescheins erfolgt. Die Qualitätsprüfung kann im Rahmen der vorteilhaften Weiterbildung eine Feststellung von grundsätzlich beliebigen, verwirklichten Merkmalen des Sofortlotteriescheins und einen Abgleich mit den geforderten Merkmalen. Insofern kann die Qualitätsprüfung auch eine Überprüfung von gestalterischen Merkmalen und/oder funktionalen Merkmalen umfassen, die insbesondere sicherheitsrelevant sind.

Die Qualitätsprüfung kann einen Lichtbeständigkeitstest umfassen, bei dem die Abdeckung der Gewinnfelder und einer unterhalb der Rubbelschicht befindlichen Sicherheitsnummer erfasst und mit einer entsprechenden Vorgabe abgeglichen wird. Ferner kann die Qualitätsprüfung eine Überprüfung der Wärme- und/oder Kältebeständigkeit des Sofortlotteriescheins und/oder eines seiner Bestandteile umfassen. Die Qualitätsprüfung kann auch eine Bewertung des Sofortlotteriescheins hinsichtlich der Durchlässigkeit von Röntgenstrahlen umfassen. Die Qualitätsprüfung kann auch eine mechanische und/oder chemische Prüfung umfassen, bei der insbesondere eine Biege- und/oder Knickfestigkeit des Sofortlotteriescheins oder eines seiner Bestandteile überprüft werden kann und/oder eine Beständigkeit der Rubbelschicht sowie der darauf befindlichen Deckschicht und Dekoration. Darüber hinaus kann die Qualitätsprüfung eine Feststellung von Beanspruchbarkeit des Sofortlotteriescheins umfassen, insbesondere hinsichtlich einer flächigen Scheuerbelastung, Resistenz gegen Flüssigkeiten, wie Wasser, Kaffee, Tee, Alkohol, Fetten. Insbesondere wird eine optische Bildprüfung vorgenommen, um die Erfüllung zumindest eines der oben genannten Qualitätskriterien zusätzlich oder während der Durchführung eines anderen Prüfverfahrens zu überprüfen.

Die Aufgabe wird auch gelöst durch einen Sofortlotterieschein, welcher insbesondere mit dem erfindungsgemäßen Verfahren oder einer seiner vorteilhaften Weiterbildungen hergestellt sein kann. Der erfindungsgemäße Sofortlotterieschein umfasst ein mehrschichtiges Drucksubstrat, welches zumindest eine strahlungsundurchlässige Sperrschicht umfasst, eine Veredelungsschicht auf mindestens eine Seite des Drucksubstrats, eine Gewinninformation im Bereich eines Gewinnfeldes auf der Veredelungsschicht, eine Klarschicht zumindest im Bereich der Gewinninformation, eine Rubbelschicht auf der Klarschicht zumindest im Bereich der Gewinninformation, eine Deckfarbe auf der Rubbelschicht, eine Dekoration auf der Deckfarbe.

Hinsichtlich der Merkmale und Eigenschaften des Sofortlotteriescheins gelten vorzugsweise die Ausführungen zum erfindungsgemäßen Verfahren oder eines seiner vorteilhaften Weiterbildungen entsprechend. Insofern kann eines oder mehrere Merkmale oder deren technische Effekte, die hier im Zusammenhang mit dem erfindungsgemäßen Verfahren oder eines seiner vorteilhaften Weiterbildungen beschrieben sind, auf den Sofortlotterieschein übertragbar sein.

In einer vorteilhaften Weiterbildung des Sofortlotteriescheins weist dessen Rubbelschicht eine wasserbasierte Dispersion mit Akrylat-Polymeren und Rubbelpartikeln auf, wobei die Akrylat-Polymere eine molare Masse unterhalb von 100 mol/kg aufweisen. Zusätzlich oder alternativ weisen die Rubbelpartikel jeweils eine Partikelgröße unterhalb von 200 nm auf, sind vorzugsweise kolloidial und besonders bevorzugt dispergierend. Insbesondere weisen die Rubbelpartikel einen PH-Wert zwischen 7 und 9 auf. Insbesondere ist die Dekoration mittels eines Injketdrucks aufgebracht und weist insbesondere eine Auflösung von 1600 x 1600 dpi auf.

Die Aufgabe wird auch gelöst durch ein Drucksystem zur Herstellung eines Sofortlotteriescheins. Bei dem Sofortlotterieschein kann es sich um den erfindungsgemäßen Sofortlotterieschein handeln. Insbesondere ist das Drucksystem dazu geeignet, das erfindungsgemäße Verfahren oder eine vorteilhafte Weiterbildung davon durchzuführen und umgekehrt.

Das erfindungsgemäße Drucksystem weist einen Digitaldrucksystem zur Aufbringung einer Veredelungsschicht, einer Gewinninformation und einer Klarschicht auf einen mehrschichtigen Spielkartenkarton auf. Ferner umfasst das Drucksystem einen Flexodrucker oder ein erstes Inkjetdrucksystem zur Aufbringung einer Rubbelschicht und einer Deckfarbe auf die Klarschicht. Das Drucksystem weist auch ein zweites Inkjetdrucksystem zur Aufbringung einer Dekoration auf die Deckfarbe auf. Ferner umfasst das Drucksystem eine Steuereinheit, welche signaltechnisch zumindest mit dem Digitaldrucksystem verbunden ist und in Abhängigkeit eines Druckprogramms dazu eingerichtet ist, zumindest die Gewinninformation individualisierbar aufzubringen.

Die Steuereinheit kann erfindungsgemäß dazu eingerichtet sein, eine systematische oder zufällige Variation mindestens eines Merkmals der Gewinninformation im Vergleich zu bereits gedruckten oder noch zu druckenden Exemplaren einzustellen. Zur Umsetzung kann die Steuereinheit eingerichtet sein, die Verwaltung und dynamische Anpassung der Druckparameter zu übernehmen und insbesondere mittels eines Druckprogramms oder Algorithmus sicherzustellen, dass für jedes Exemplar eine individuelle Variation generiert wird.

Die Steuereinheit ist vorzugsweise mit einer Datenbank verbunden, aus der variable Daten, wie Seriennummern, Barcodes, QR-Codes oder individuelle Textinformationen, abgerufen werden können und weist jedem Sofortlotterieschein einen eindeutigen Satz an Gewinninformationen und deren Merkmale zu. Dadurch kann sichergestellt werden, dass keine Duplikate entstehen. Zudem kann die Steuereinheit algorithmisch generierte Muster oder Designs in den Druckprozess integrieren, sodass für jede gedruckte Einheit eine einzigartige grafische Darstellung entsteht.

Vorzugsweise ist die Steuereinheit signaltechnisch zumindest mit dem ersten Inkjetdrucksystem und/oder dem zweiten Inkjetdrucksystem verbunden und in Abhängigkeit des Druckprogramms dazu eingerichtet, zumindest die Veredelungsschicht und/oder die Dekoration individualisierbar aufzubringen.

Die Aufgabe wird auch gelöst durch eine Zusammensetzung für eine Rubbelschicht, insbesondere für das erfindungsgemäße Verfahren oder eine vorteilhafte Weiterbildung hiervon und/oder für den erfindungsgemäßen Sofortlotterieschein oder eine vorteilhafte Weiterbildung hiervon. Die Zusammensetzung umfasst eine wasserbasierte Dispersion mit Akrylat-Polymeren und Rubbelpartikel, wobei die darin enthaltenen Akrylat-Polymere insbesondere eine molare Masse unterhalb von 100 kg/mol und/oder wobei die Rubbelpartikel jeweils eine Partikelgröße unterhalb von 200 nm aufweisen, vorzugsweise kolloidial sind, besonders bevorzugt dispergierend sind und insbesondere einen PH-Wert zwischen 7 und 9 aufweisen.

Mögliche Ausführungsformen der Erfindung sind nachfolgend beispielhaft mit Verweis auf die Figuren erläutert. Es zeigen
- Figur 1: einen Sofortlotterieschein in unterschiedlichen Zuständen in den Ansichten a), b), c);
- Figur 2: den Sofortlotterieschein in den Explosionsansichten a), b);
- Figur 3: ein Drucksysteme für die Herstellung des Sofortlotteriescheins gemäß Ansicht a) sowie eine Weiterverarbeitungsstrecke gemäß Ansicht b).

Ein Sofortlotterieschein ist ein Los, das dem Spieler unmittelbar nach dem Erwerb die Möglichkeit bietet, durch Freirubbeln eines verdeckten Gewinnfeldes festzustellen, ob und in welcher Höhe ein Gewinn erzielt wurde. Ein Sofortlotterieschein weist dabei in der Regel eine oder mehrere Gewinninformationen auf, die verdeckt oder codiert aufgebracht sind und nach dem Entfernen einer Schutzschicht sichtbar oder auswertbar werden. Die Gewinnvergabe basiert in aller Regel auf einem vorher festgelegten Zufallsprinzip oder einer kontrollierten Ausschüttungslogik. Typischerweise wird ein Sofortlotterieschein im Druckverfahren hergestellt, wobei gleichermaßen hohe Anforderungen an dessen Fälschungssicherheit und individuelle Gestaltbarkeit gestellt werden.

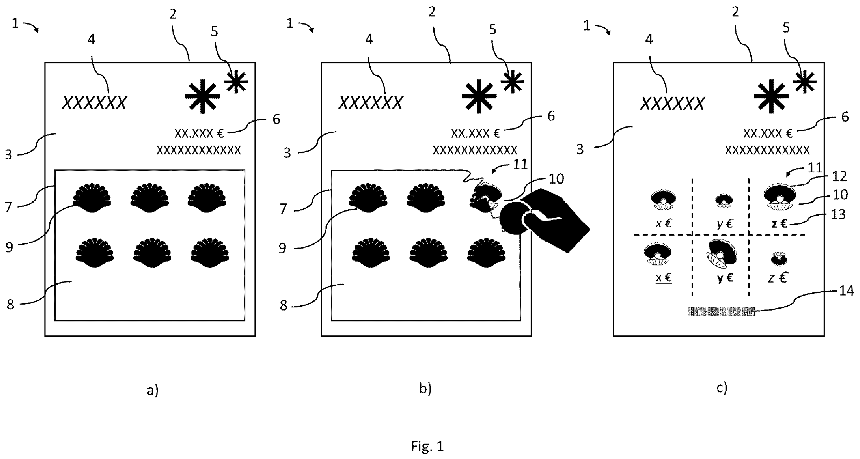

Figur 1 zeigt in den Ansichten a), b) und c) einen Sofortlotterieschein 1, mittels dessen die oben genannten Anforderungen in einfacher Weise erfüllt werden.

Ansicht a) der Figur 1 zeigt den Sofortlotterieschein 1 in einem Zustand, in dem er erworben werden kann. Der Sofortlotterieschein 1 umfasst ein Drucksubstrat 2, welches, wie nachfolgend im Detail erläutert ist, mit mehreren über- bzw. untereinander befindlichen Schichten versehen ist, die sowohl dekorative als auch funktionale Funktionen erfüllen. In hier nicht näher gezeigter Weise ist auf dem Drucksubstrat, welches im vorliegenden Ausführungsbeispiel, aus Spielkartenkarton gebildet ist, eine Veredelungsschicht 3 angeordnet, die Silber, Gold oder andere Sonderfarben enthalten kann. Auf der Veredelungsschicht 3 befinden sich gestalterische Elemente, die sowohl auf wörtliche Angaben 4 als auch auf bildhafte Bestandteile 5 zugreifen, die etwa zur Wiedergabe eines beliebigen Markenzeichens dienen können und im vorliegenden Ausführungsbeispiel zur besseren Nachvollziehbarkeit generisch gewählt sind. Die Anordnungen der Elemente 4, 5 entsprechen einem individuell festgelegten Layout, das neben der möglichen Anordnung eines Markenzeichens der besseren Wiedererkennbarkeit und Zuordenbarkeit zu einem Spielanbieter dienen können. Eine weitere Wortangabe 6 kann eine Information bezüglich der maximal erreichbaren Gewinnsumme enthalten sowie einen entsprechenden erläuternden Hinweis. Oberhalb der Veredelungsschicht 3 befindet sich in hier nicht sichtbarer Weise eine transparente Klarschicht welche zumindest unterhalb einer Rubbelschicht 7 sowie der darauf befindlichen Deckfarbe 8 und der wiederum darauf befindlichen Dekorationselemente 9. Die Dekorationselemente 9 sind beispielhaft in Gestalt stilisierter Muscheln dargestellt, jedoch kann es sich natürlich um grundsätzlich beliebige Dekorationselemente handeln.

Mit Blick auf Ansicht a) der Figur 1 ist relevant, dass die Dekorationselemente 9 mittels Vierfarbdruck aufgetragen sind und eine Auflösung von 1600 x 1600 dpi aufweisen. Ebenso ist relevant, dass die Dekorationselemente 9, wie nachfolgend ebenfalls noch im Detail erläutert ist, hinsichtlich mindestens eines Merkmals individualisiert mittels Digitaldrucks auf die Deckschicht 8 aufgetragen sind.

Ansicht b) der Figur 1 zeigt den Sofortlotterieschein 1 aus Ansicht b), sodass für entsprechende Merkmale die gleichen Bezugszeichen verwendet sind. Wie anhand von Ansicht b) der Figur 1 verbildlicht ist, kann die Rubbelschicht 7 gemeinsam mit der darauf befindlichen Deckschicht 8 und den Dekorationselementen 9 entfernt werden. Dies kann in an sich bekannter Weise mittels eines Fingernagels, einer Münze oder eines anderen, vergleichbar scharfkantigen Gegenstandes erfolgen. Es ist eine Besonderheit des hier gezeigten Sofortlotteriescheins 1, dass die Rubbelschicht 7 hochauflösend und mehrfarbig bedruckt ist, was durch die Zusammensetzung der Rubbelschicht 7 erreicht wird. Diese basiert nämlich auf einer wasserbasierten Dispersion mit Akrylat-Polymeren und Rubbelpartikeln. Die enthaltenen Akrylat-Polymere weisen eine molare Masse unterhalb von 100 kg/mol auf und die Rubbelpartikel weisen jeweils eine Partikelgröße unterhalb von 200 nm auf, sind zudem kolloidial, dispergierend und haben einen PH-Wert zwischen 7 und 9. Gleichzeitig ermöglicht es die Zusammensetzung der Rubbelschicht, mittels eines Inkjet-Verfahrens auf die Klarschicht aufgetragen zu werden.

Wie anhand von Ansicht b) der Figur 1 ebenfalls erkennbar ist, wird durch Entfernen der Rubbelschicht 7 sowie den darauf befindlichen Deckschicht 8 und Dekorationselementen 9 ein Gewinnfeld 10 freigelegt, welches eine Gewinninformation 11 enthält. Durch vollständiges Entfernen der Rubbelschicht 7 sowie den darauf befindlichen Deckschicht 8 und Dekorationselementen 9 ergibt sich ein Zustand des Sofortlotteriescheins 1, welcher in Ansicht c) der Figur 1 gezeigt ist.

Gemäß Ansicht c) der Figur 1 sind alle Gewinnfelder 10 des Sofortlotteriescheins 1 gemeinsam mit den darin enthaltenen Gewinninformationen 11 freigelegt. Die Gewinnfelder 10 sind zur besseren Anschaulichkeit mittels Strichlinien unterteilt, jedoch müssen diese nicht notwendigerweise vorgesehen sein oder die Gewinnfelder 10 können anderweitig gekennzeichnet sein.

Die Gewinninformation 11 umfasst sowohl Bildelemente 12 als auch Wortelemente 13. Es ist relevant, dass diese individuell in den Gewinnfeldern 10 aufgebracht sind, was sich in dem hier gezeigten Ausführungsbeispiel dadurch bemerkbar macht, dass sowohl die Bildelemente 12 als auch die Wortelemente 13 sich in mindestens einem Merkmal unterscheiden. Rein beispielhaft sei darauf verwiesen, dass die Bildelemente 12 sich etwa in ihrer Größe, Orientierung, Position unterscheiden. Die Wortelemente 13 geben an, wie hoch eine entsprechende Gewinnsumme ist und unterscheiden sich ebenfalls in Schriftart, Schriftgröße, Schriftposition voneinander. Wichtig ist, dass die Gewinninformationen sich nicht nur im Vergleich zueinander, sondern auch von dem Sofortlotterieschein 1 zu einem anderen Sofortlotterieschein unterscheiden und diese damit individualisieren. Gleichzeitig ist es durch betrügerische Methoden nur schwer möglich, ohne sichtbare Zerstörung der Rubbelschicht 7 festzustellen, ob und welche Gewinninformationen 11 von ihr verdeckt sind. Die Gestaltung des Sofortlotteriescheins 1 wird durch den Einsatz von Digitaldruckverfahren erreicht, wie anhand der übrigen Figuren noch im Detail beschrieben ist. Wie anhand von Ansicht c) der Figur 1 ebenfalls gezeigt ist, ist in dem hier gezeigten Ausführungsbeispiel unterhalb der Gewinnfelder 10 ein Sicherheitscode 14 angebracht. Dieser ist als Strichcode ausgeführt und kann bei Einlösung der Gewinnsumme zur Verifizierung der Echtheit des Sofortlotteriescheins dienen. Natürlich kann auch eine beliebige andere Form eines Sicherheitscodes 14 verwendet werden.

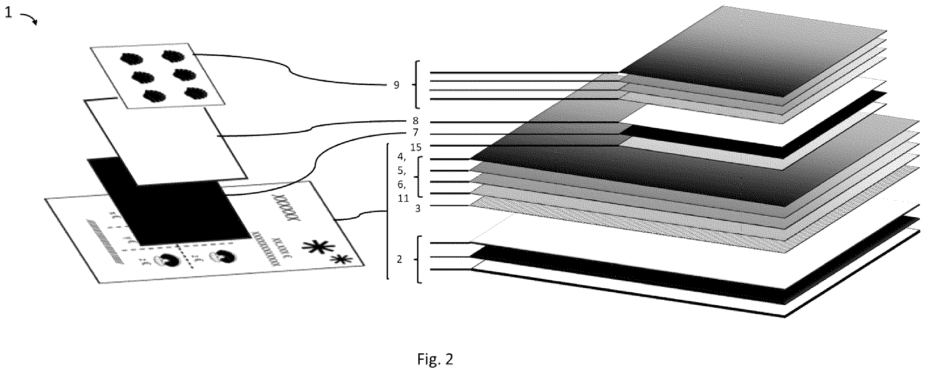

Figur 2 zeigt eine Explosionsansicht des Sofortlotteriescheins 1, welcher mehrschichtig strukturiert ist. Figur 2 verdeutlicht, welche Druckschichten zur Erzeugung der in Figur 1 gezeigten Gestaltungselemente zum Einsatz kommen. Zum besseren Verständnis werden bei gleichen oder gleichwirkenden Bestandteilen auf die gleichen Bezugszeichen zurückgegriffen, wie in Figur 1.

Gemäß Figur 2 bildet das Drucksubstrat 2 die strukturelle Basis des Sofortlotteriescheins 1 und der Aufnahme der darauf befindlichen Schichten. Bei dem Drucksubstrat 2 handelt es sich um einen Spielkartenkarton, bei dem zwei außenliegende Papierschichten mittels einer schwarzen, graphithaltigen Klebeschicht verbunden ist. Dieser Aufbau sorgt für die erforderliche Stabilität und gleichzeitig die gewünschte Flexibilität des Sofortlotteriescheins 1. Die graphithaltige Klebeschicht bewirkt, dass der Sofortlotterieschein strahlungsundurchlässig ist, insbesondere für sichtbares Licht, sodass die Gewinninformationen auch bei Durchleuchten des Sofortlotteriescheins 1 mit einer Lichtquelle nicht erkennbar sind.

Der Spielkartenkarton, welcher das Drucksubstrat 2 bildet, ist mit einer Veredelungsschicht 3 versehen. Die Veredelungsschicht 3 ist mittels Trockentonerdigitaldrucks bedruckt, wodurch einerseits das Gesamtlayout des Sofortlotteriescheins durch die Elemente 4, 5, 6 eingestellt wird sowie andererseits auch die Gewinninformation 11 auf den Sofortlotterieschein 1 aufgebracht wird. Der Trockentonerdigitaldruck erfolgt vierfarbig, insbesondere in der Farbkombination Schwarz, Cyan, Magenta, Gelb (auch: CKMY), sodass entsprechend vier Schichten erzeug werden können, um die Elemente 4, 5, 6, 11 zu drucken. Zur besseren Deutlichkeit sei nochmals darauf hingewiesen, dass es sich bei den gezeigten Druckschichten nicht um die Elemente 4, 5, 6, 11 handelt, sondern um diejenigen Druckschichten, die mit einer individuellen Farbverteilung dazu dienen, zumindest die Elemente 4, 5, 6, 11, also die Angaben 4, bildhafte Bestandteile 5, die Wortangaben 6 und die Gewinninformation 11 zu erzeugen. Die Auflösung beträgt 2400 x 2400 dpi.

Im Bereich der Gewinnfelder 10, auf denen sich die Gewinninformationen 11 befinden, sowie im Bereich des Sicherheitscodes 14 ist die Klarschicht 15 aufgetragen. Diese schützt einerseits den Sicherheitscode 14 und die Gewinninformationen 11 vor unerwünschter mechanischer Manipulation oder Beschädigung der Rubbelschicht 7. Gleichzeitig ist die Klarschicht 15 mit der Rubbelschicht 7 derart zusammenwirkend verbunden, dass sie einerseits gute Haftung bewirkt und andererseits ein leichtes Entfernen ermöglicht. Die Rubbelschicht 7 basiert, wie oben schon erläutert, auf einer wasserbasierten Dispersion mit Akrylat-Polymeren und Rubbelpartikeln. Die enthaltenen Akrylat-Polymere weisen eine molare Masse unterhalb von 100 kg/mol auf und die Rubbelpartikel weisen jeweils eine Partikelgröße unterhalb von 200 nm auf, sind zudem kolloidial, dispergierend und haben einen PH-Wert zwischen 7 und 9. Gleichzeitig ermöglicht es die Zusammensetzung der Rubbelschicht, mittels eines Inkjet-Verfahrens auf die Klarschicht 15 aufgetragen zu werden.

Auf der Rubbelschicht 7 ist in bereits beschriebener Weise eine Deckschicht 8 angeordnet, welche die Rubbelschicht einerseits vollflächig überdeckt und ihrerseits mittels eines Inkjet-Verfahrens mit einer vierfarbigen Dekorationsschicht 9 und einer Auflösung von 1600 x 1600 dpi und individualisiert bedruckt sind. Entsprechend den Ausführungen bezüglich der Elemente 4, 5, 6, 11, sei auch in Bezug auf die Dekorationsschicht 9 darauf hingewiesen, dass diese nach der Art des Vierfarbdrucks prinzipbedingt durch Auftragen von vier Farbschichten erzeugt wird, deren Farbverteilung zum gewünschten Erscheinungsbild der Dekorationsschicht führt.

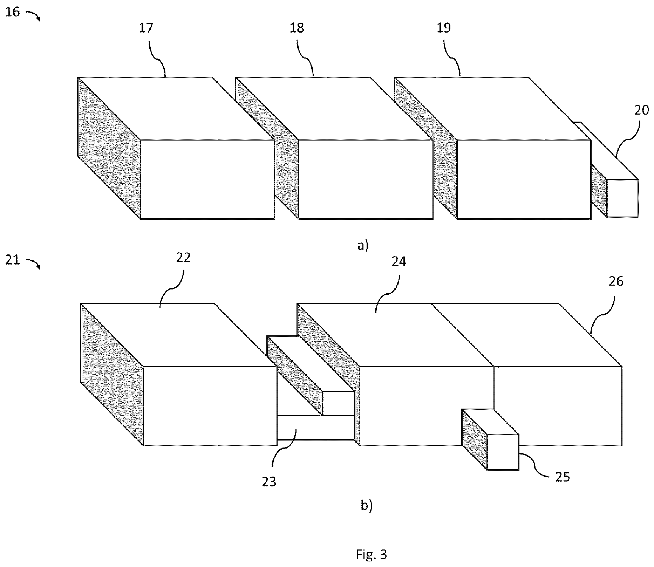

Zur Herstellung des Sofortlotteriescheins 1 gemäß dem in Figur 1 und 2 gezeigten Aufbau können verschiedene Drucksysteme 16 vorteilhaft sein, welche in den Ansichten a) und b) der Figur 3 gezeigt sind.

Das in Ansicht a) der Figur 3 gezeigte Drucksystem 16 weist die Module 17, 18, 19, 20 auf. Bei Modul 17 handelt es sich um ein Trockentonerdigitaldrucksystem, mittels dessen in oben bereits erläuterter Weise die Veredelungsschicht 3, sowie die Layoutelemente 4, 5, 6, Gewinninformation 11 und die Klarschicht 15 auf. Durch den Einsatz eines Trockentonerverfahren ist eine gute Trennung der Druckfarbe vom Papier im Recyclingstrom gegeben. Im Underlay und Overlay können die Spezialtoner Klartoner, Goldtoner, Silbertoner, Weißtoner, Strukturtoner und Pinktoner verdruckt werden. Die Druckgeschwindigkeit wird durch die Verwendung der Spezialtoner nicht beeinträchtigt. Das Farbwerk im Overlay ist mit einem Klartoner belegt. Veredelungen werden daher im Underlay vorgenommen.

Modul 18 ist fördertechnisch mit Modul 17 verkettet und trägt im Flexodruckverfahren die Rubbelfarbe 7 und die Deckschicht 8 auf. Jedem Farbwerk ist eine IR-Trocknereinheit zugeordnet. Mit Hilfe eines vierfarbigen Inkjetdrucksystems 19 wird anschließend das Druckbild vervollständigt. Abschließend werden die Sofortlotteriescheine in Modul 20 vereinzelt und abgestapelt.

Alternativ kann anstelle eines analogen Flexodruckverfahrens mehrere Inkjetdruckmodule 18 und 19 zum Einsatz kommen, wodurch das Druckverfahren volldigital ausgeführt werden kann. Die eigens dafür vorgesehene wasserbasierte schwarze Rubbelfarbe für die Rubbelschicht ist die oben beschriebene Acrylat-basierte Partikeldispersion mit Feststoffpartikeln. Das Verdrucken der Rubbelfarbe führt zu keinem Auflösen, Anlösen oder Anquellen des Klartoners bzw. des Drucksubstrats. Die verwendeten Druckköpfe sind in der Lage, die Partikel ohne ein Verstopfen des Kopfes zu verdrucken. Die Form der Druckköpfe ist an die eingesetzte Tinte angepasst. Die Druckkopfeigenschaften bzgl. Tropfenvolumen, Tropfengeschwindigkeit, Drucktemperatur, Prozesseigenschaften beim Drucken und im Standby führen zu einer guten Druckqualität. Im Anschluss erfolgt das Verdrucken eines geeigneten Deckweißes im Inkjetdruck. Ein zweites Inkjektdruckmodul 19 dient dem Auftrag der Dekoration 9 auf die Deckfarbe.

Ansicht b) der Figur 3 zeige eine Weiterverarbeitungsschstrecke 21, welche fördertechnisch mit dem Drucksystem gemäß Ansicht a) der Figur 3 verknüpft sein können. Die Weiterverarbeitungsstrecke 21 umfasst fünf verschiedene Module 22, 23, 24, 25, 26. Eine Rotationsstanze 22 dient dazu, die Sofortlotteriescheine zu vereinzeln und mittels eines Fördermittels an das Bildverarbeitungssystem 23 zu übergeben. Hier wird neben der Vollständigkeit auch die Unversehrtheit der Sofortlotteriescheine überprüft sowie nach grundsätzlich beliebigen Qualitätskriterien. Unvollständige Paketeinheiten oder Paketeinheiten mit beschädigten Losen können nach dem Sammeln und Banderolieren in Modul 24 an das Ausschleusmodul 25 übergeben und aussortiert werden. Abschließend werden die banderolierten Paketeinheiten in Folie eingeschweißt und in Kartons verpackt. Dies erfolgt in Modul 26.

## Patentansprüche

1. Verfahren zur Herstellung eines Sofortlotteriescheins, umfassend die Verfahrensschritte
A) Bereitstellen eines mehrschichtigen Drucksubstrats (2), welches zumindest eine strahlungsundurchlässige Sperrschicht umfasst;
B) Aufbringen einer Veredelungsschicht (3) auf mindestens eine Seite des Drucksubstrats (2);
C) Individualisiertes Aufbringen mindestens einer Gewinninformation (11) zumindest im Bereich eines Gewinnfeldes (10) auf die Veredelungsschicht (3) mittels Mehrfarbdrucks;
D) Aufbringen einer Klarschicht (15) zumindest auf die Gewinninformation (11), vorzugsweise vollflächig auf das Gewinnfeld (10);
E) Aufbringen einer Rubbelschicht (7) auf die Klarschicht (15) zumindest im Bereich der Gewinninformation (11), vorzugsweise vollflächig im Bereich des Gewinnfeldes (10);
F) Aufbringen einer Deckfarbe (8) auf die Rubbelschicht (7);
G) Individualisiertes Aufbringen einer Dekoration (9) auf die Deckfarbe (11).

2. Verfahren nach Anspruch 1,
bei dem das Drucksubstrat (2) ein mehrschichtiger Spielkartenkarton ist.

3. Verfahren nach einem der voranstehenden Ansprüche,
bei dem die Veredelungsschicht (3), die Gewinninformation (11) und die Klarschicht (15) mittels Digitaldrucks aufgebracht werden, insbesondere mit einer Auflösung von 2400 x 2400 dpi.

4. Verfahren nach einem der voranstehenden Ansprüche,
bei dem die Rubbelschicht (10) und die Deckfarbe (11) mittels analogen Flexodrucks aufgebracht werden.

5. Verfahren nach einem Ansprüche 1 bis 2,
bei dem die Rubbelschicht (10) und die Deckfarbe (11) mittels Inkjetdrucks aufgebracht werden.

6. Verfahren nach Anspruch 4, bei dem
die Rubbelschicht (10) eine wasserbasierte Dispersion mit Akrylat-Polymeren und Rubbelpartikel umfasst, wobei die darin enthaltenen Akrylat-Polymere insbesondere eine molare Masse unterhalb von 100 kg/mol und/oder wobei die Rubbelpartikel jeweils eine Partikelgröße unterhalb von 200 nm aufweisen, vorzugsweise kolloidial sind, besonders bevorzugt dispergierend sind und insbesondere einen PH-Wert zwischen 7 und 9 aufweisen.

7. Verfahren nach einem der voranstehenden Ansprüche,
bei dem die Dekoration (9) mittels Injketdrucks aufgebracht wird, insbesondere mit einer Auflösung von 1600 x 1600 dpi.

8. Verfahren nach einem der voranstehenden Ansprüche,
bei dem in Verfahrensschritt C) zumindest die Gewinninformation (11) innerhalb eines Gewinnfeldes (10) variabel eingestellt wird, insbesondere mittels mindestens eines individualisierenden Merkmals.

9. Verfahren nach einem der voranstehenden Ansprüche, mit Verfahrensschritt
H) Vereinzelung des Sofortlotteriescheins (1), insbesondere mittels einer Stanzvorrichtung;

10. Verfahren nach einem der voranstehen Ansprüche, mit Verfahrensschritt
I) Qualitätsprüfung des Sofortlotteriescheins (1).

11. Sofortlotterieschein, insbesondere hergestellt mittels einem Verfahren nach einem der Ansprüche 1 bis 10, umfassend
ein mehrschichtiges Drucksubstrat (2), welches zumindest eine strahlungsundurchlässige Sperrschicht umfasst, eine Veredelungsschicht (3) auf mindestens eine Seite des Drucksubstrats (2), eine Gewinninformation (11) im Bereich eines Gewinnfeldes (10) auf der Veredelungsschicht (3), eine Klarschicht (15) zumindest im Bereich der Gewinninformation (11), eine Rubbelschicht (7) auf der Klarschicht (15) zumindest im Bereich der Gewinninformation (11), eine Deckfarbe (8) auf der Rubbelschicht (7), eine Dekoration (9) auf der Deckfarbe (8).

12. Sofortlotterieschein (1) nach Anspruch 11, bei dem
die Rubbelschicht (7) eine wasserbasierte Dispersion mit Akrylat-Polymeren und Rubbelpartikeln umfasst, wobei die Akrylat-Polymere eine molare Masse unterhalb von 100 mol/kg und/oder wobei die Rubbelpartikel jeweils eine Partikelgröße unterhalb von 200 nm aufweisen, vorzugsweise kolloidial sind, besonders bevorzugt dispergierend sind und insbesondere einen PH-Wert zwischen 7 und 9 aufweisen und bei dem die Dekoration (9) mittels eines Injketdrucks aufgebracht ist, insbesondere mit einer Auflösung von 1600 x 1600 dpi.

13. Drucksystem (16) zur Herstellung eines Sofortlotteriescheins, insbesondere mittels eines Verfahrens nach einem der Ansprüche 1 bis 10, umfassend
einen Trockentonerdigitaldrucker zur Aufbringung einer Veredelungsschicht (3) einer Gewinninformation (11) und einer Klarschicht (8) auf einen mehrschichtigen Spielkartenkarton, einen Flexodrucker oder ein erstes Inkjetdrucksystem (18) zur Aufbringung einer Rubbelschicht (7) und einer Deckfarbe (8) auf die Klarschicht, insbesondere mittels unterschiedlicher Druccköpfe, und ein zweites Inkjetdrucksystem (19) zur Aufbringung einer Dekoration (9) auf die Deckfarbe (9), ferner umfassend eine Steuereinheit, welche signaltechnisch zumindest mit dem Trockentonerdigitaldrucker verbunden ist und in Abhängigkeit eines Druckprogramms dazu eingerichtet ist, zumindest die Gewinninformation (11) individualisierbar aufzubringen.

14. Drucksystem nach Anspruch 13, bei dem die Steuereinheit signaltechnisch zumindest mit dem ersten Inkjetdrucksystem (18) und/oder dem zweiten Inkjetdrucksystem (19) verbunden ist und in Abhängigkeit des Druckprogramms dazu eingerichtet ist, zumindest die Veredelungsschicht und/oder Dekoration individualisierbar aufzubringen.

15. Zusammensetzung für eine Rubbelschicht, insbesondere für ein Verfahren nach einem der Ansprüche 1 bis 10, einen Sofortlotterieschein nach einem der Ansprüche 11 oder 12, welche eine wasserbasierte Dispersion mit Akrylat-Polymeren und Rubbelpartikel umfasst, wobei die darin enthaltenen Akrylat-Polymere insbesondere eine molare Masse unterhalb von 100 kg/mol und/oder wobei die Rubbelpartikel jeweils eine Partikelgröße unterhalb von 200 nm aufweisen, vorzugsweise kolloidial sind, besonders bevorzugt dispergierend sind und insbesondere einen PH-Wert zwischen 7 und 9 aufweisen.
